# EUROPÄISCHE PATENTSCHRIFT

(11) **EP 4 194 277 B1**
(45) Veröffentlichungstag und Bekanntmachung des Hinweises auf die Patenterteilung: **02.04.2025**
(21) Anmeldenummer: 22212675.7
(22) Anmeldetag: 09.12.2022
(51) Int. Cl.: B60R 15/00, A47K 4/00, B61D 35/00, B64D 11/02

(54) **FREIZEITFAHRZEUG UND SANITÄREINRICHTUNG FÜR EIN FREIZEITFAHRZEUG**
RECREATIONAL VEHICLE AND SANITARY DEVICE FOR RECREATIONAL VEHICLE
VÉHICULE DE LOISIRS ET DISPOSITIF SANITAIRE POUR UN VÉHICULE DE LOISIRS

(30) Priorität: 09.12.2021 DE 102021132586
(43) Veröffentlichungstag der Anmeldung: 14.06.2023
(73) Patentinhaber: Hymer GmbH & Co. KG, 88339 Bad Waldsee (DE)
(72) Erfinder: Steigmiller, Anton, 88444 Ummendorf (DE); Angert, Tobias, 88400 Biberach an der Riß (DE)
(74) Vertreter: Müller Schupfner & Partner Patent- und Rechtsanwaltspartnerschaft mbB (Muc)

(56) Entgegenhaltungen:
- EP-A1- 3 674 215
- WO-A1-00/27266
- WO-A1-96/11124
- DE-A1- 102005 021 702
- DE-U1- 20 003 780
- DE-U1- 202004 017 165
- KR-A- 20200 089 977

## Beschreibung

Die Erfindung betrifft eine Sanitäreinrichtung für ein Freizeitfahrzeug und ein Freizeitfahrzeug mit der Sanitäreinrichtung.

Aus der DE 199 48 182 A1 ist eine Duscheinrichtung für ein Wohnmobil bekannt. Wenn die Dusche nicht benutzt wird, dann ist eine Duschwanne der Duscheinrichtung von einer Abdeckung verschlossen, wobei ein zusammengelegter Vorhang in die Duschwanne unter die Abdeckung eingelegt ist. Somit steht der für das Duschen vorgesehene Bereich dann für andere Nutzungsmöglichkeiten zur Verfügung. Beispielsweise kann eine Person dann auf der Abdeckung stehen, um ein neben dem Duschbereich vorgesehenes Waschbecken zu nutzen. Ferner ist die Nutzung eines Klosetts möglich.

Die aus der DE 199 48 182 A1 bekannte Duscheinrichtung hat den Nachteil, dass der Duschbereich im Vergleich zum gesamten Raumbedarf der Nasszelle klein ist. Hierbei kann eine Person, die die Dusche nutzt, bei geöffneter Abdeckung nur in einem Teil der Duschwanne stehen. Ferner muss die Person hierbei auf einer das Ablaufen des verbrauchten Duschwassers begünstigenden kegelförmigen Fläche stehen. Dies ist im Vergleich zum Stehen auf einer zumindest näherungsweise horizontalen Fläche unangenehm. Des Weiteren ist die Duschwanne, auch um den Duschvorhang bei geschlossener Abdeckung aufnehmen zu können, deutlich tiefer als der angrenzende Fahrzeugboden angeordnet, so dass die Person beim Betreten und Verlassen der Duschwanne eine Stufe überwinden muss. Die erschwert auch ein Reinigen der Duschwanne.

Aus der DE 295 03 469 U1 ist eine kompakte Nasszelle für ein Wohnmobil bekannt. Bei der bekannten Nasszelle ist ein bestimmter Bereich der Nasszelle ausschließlich zum Duschen vorgesehen. Ein Duschboden ist hierbei bei einer beschriebenen Ausgestaltung gegenüber dem übrigen Waschraumboden der Nasszelle vertieft angeordnet. Ferner ist der Boden des Duschbereichs durch eine Wasserauffangrinne vom Boden des Waschbereichs getrennt. Die Abtrennung der Dusche erfolgt über eine Trennwand aus mehreren klappbaren Elementen, die scharnierartig miteinander verbunden sind.

Die aus der DE 295 03 469 U1 bekannte Nasszelle hat den Nachteil, dass der Raumbedarf für einen Einbau in ein Freizeitfahrzeug groß ist, da der Duschbereich ausschließlich zum Duschen genutzt wird.

Aus der KR 2020 0098877 A ist ein Wohnwagen mit einem veränderbaren Badezimmer bekannt. Der Badezimmerraum kann hierbei variabel vergrößert werden, so dass der Innenraum des Wohnwagens maximiert. Die Toilette ist direkt auf einem Boden montiert. Vor der Toilette kann eine zusätzliche Bodenplatte bereitgestellt werden, die im Badezimmerraum verstaut werden kann.

Bei der Grundrissgestaltung von Campingfahrzeugen kann es erforderlich sein, dass die Sanitärzelle im Bereich des Radkastens positioniert wird. Dann stellen sich zusätzliche Anforderungen an die Ausgestaltung einer Nasszelle.

Der vorliegenden Erfindung liegt die Aufgabe zugrunde, eine Sanitäreinrichtung und ein Freizeitfahrzeug, insbesondere ein Wohnmobil oder einen Wohnwagen, mit solch einer Sanitäreinrichtung anzugeben, die in verbesserter Weise ausgestaltet sind.

Diese Aufgabe wird durch eine Sanitäreinrichtung mit den Merkmalen des unabhängigen Patentanspruchs 1 und durch ein Freizeitfahrzeug mit den Merkmalen des Patentanspruchs 7 gelöst. Vorteilhafte Weiterbildungen der Erfindung sind in den Unteransprüchen angegeben.

Die Aufgabe wird erfindungsgemäß durch eine Sanitäreinrichtung für ein Freizeitfahrzeug, insbesondere ein Wohnmobil oder einen Wohnwagen, gelöst, wobei ein von zumindest einer Person betretbarer Boden und ein Toilettenbecken vorgesehen sind, wobei ein Auftritt vorgesehen ist, der für eine Nutzung des Toilettenbeckens zumindest in einem an das Toilettenbecken angrenzenden Bereich des betretbaren Bodens über den betretbaren Boden verstellbar ist, wobei das Toilettenbecken auf ein Podest gesetzt ist, wobei das Podest einen Zwischenraum aufweist, wobei der Auftritt in einer Ausgangsposition zumindest im Wesentlichen in dem Zwischenraum anordenbar ist und wobei der Auftritt aus dem Zwischenraum durch eine Rotationsbewegung über den betretbaren Boden schwenkbar ist. Ferner wird die Erfindung durch ein Freizeitfahrzeug, insbesondere ein Wohnmobil oder einen Wohnwagen, mit zumindest einer solchen Sanitäreinrichtung gelöst.

Gemäß der Erfindung ist das Toilettenbecken auf ein Podest gesetzt, wobei das Podest einen Zwischenraum aufweist und der Auftritt in einer Ausgangspositior zumindest im Wesentlichen in dem Zwischenraum anordenbar ist. Somit kann in vorteilhafter Weise eine Anhebung des Toilettenbeckens erfolgen.

Vorteilhaft ist es auch, dass das Podest im montierten Zustand zumindest teilweise über einem Radkasten des Freizeitfahrzeugs angeordnet ist. Hierdurch kann das Toilettenbecken über dem Radkasten angeordnet werden, um eine optimale Nutzung des verfügbaren Raums im Freizeitfahrzeug zu ermöglichen.

Vorteilhaft ist es, dass das Podest im montierten Zustand auf eine Oberkante des Radkastens aufgesetzt ist und/oder dass das Toilettenbecken mit seiner Unterkante auf das Podest gesetzt ist. Hierdurch kann das Toilettenbecken über dem Radkasten stehen.

Gemäß der Erfindung ist der Auftritt aus dem Zwischenraum durch eine Rotationsbewegung über den betretbaren Boden schwenkbar. Dies ermöglicht eine einfache Verstellung. Die Verstellung kann beispielsweise durch Muskelkraft erfolgen. Vorteilhaft ist es, dass eine Schwenkwand vorgesehen ist, die aus einer Ausgangsposition in eine Duschposition schwenkbar ist, und dass eine Drehachse des Auftritts und eine Drehachse der Schwenkwand so nahe beieinander angeordnet sind, dass bei einem Verstellen der Schwenkwand aus ihrer Ausgangsposition in ihre Duschposition die Schwenkwand den Auftritt zumindest teilweise in seine Ausgangsposition zurückstellt. Hierdurch wird gewissermaßen automatisch beim Verstellen der Schwenkwand auch der Auftritt zurück geschoben. Damit wird eine Fehlbedienung verhindert.

Vorteilhaft ist es, dass eine Höhe einer Sitzfläche des Toilettenbeckens relativ zu dem Auftritt so vorgegeben ist, dass eine ergonomische Sitzposition einer Person auf der Sitzfläche des Toilettenbeckens ermöglicht ist, wenn die Füße der Person auf der Auftrittsfläche abgestützt sind. Insbesondere kann dadurch beim Montieren des Toilettenbeckens über dem Radkasten eine ergonomische Sitzposition ermöglicht werden. Vorteilhaft ist es somit auch, dass eine Höhe einer Sitzfläche des Toilettenbeckens relativ zu dem Auftritt aus einem Bereich von etwa 42 cm bis etwa 48 cm vorgegeben ist.

Vorteilhaft ist es somit auch, dass das Toilettenbecken zumindest teilweise über einem Radkasten des Freizeitfahrzeugs angeordnet ist. Hierdurch kann insbesondere die optimale Raumausnutzung ermöglicht werden. Die Sanitäreinrichtung kann insbesondere als Sanitärzelle realisiert sein.

Die Toilette kann somit auf ein Podest gestellt werden, um oberhalb des Radkastens stehen zu können. Die erhöhte Toilettenposition wäre für einen Nutzer aber ergonomisch extrem unangenehm. Ein Podest, das den Auftrittsbereich vor der Toilette verlängert, würde die Stehhöhe in der ganzen Sanitäreinrichtung verringern. Diese reduzierte Stehhöhe würde sich dann negativ auf die Nutzung von Waschbecken und Dusche auswirken.

Je nach Ausgestaltung kann eine Höhe von der Auftrittsfläche des Auftritts vor der Toilette zur Sitzposition auf dem Toilettenbecken auf ergonomisch angenehme 42 bis 48 cm reduziert werden, ohne dass dadurch die Stehhöhe im Bereich der Dusche und des Waschbeckens reduziert sind, wenn diese genutzt werden.

Zwischen der Oberkante des Radkastens und der Unterkante des Toilettenbeckens einer Toilette wird vorzugsweise ein Podest mit einem Zwischenraum gesetzt. In diesen Zwischenraum wird vorzugsweise ein segmentbogenförmiger Auftritt gesteckt. Dieser Auftritt ist vorzugsweise über eine Achse gelagert und wird dadurch sicher an seiner Position gehalten. Der Auftritt ist durch eine Rotationsbewegung ausdrehbar. Für die Funktionen Duschen und Waschbeckennutzung steht dadurch dem Nutzer die volle Raumhöhe der Sanitäreinrichtung, insbesondere des Fahrzeugs, zur Verfügung. Mit ausgedrehtem Auftritt wird eine ergonomisch angenehme Toilettennutzung möglich.

Falls die Sanitäreinrichtung, insbesondere die Sanitärzelle, mit einer Schwenkwand ausgerüstet ist, dann wird vorzugsweise auf Achsennähe des Auftritts und der Schwenkwand geachtet. Ferner wird der Auftritt beim Öffnen der Schwenkwand mit zurückgeschoben. Eine Fehlbedienung durch den Nutzer kann dadurch nahezu ausgeschlossen werden.

Weitere Vorteile und Einzelheiten der Erfindung werden anhand der in den schematischen Figuren dargestellten Ausführungsbeispiele näher erläutert. Hierbei zeigen:

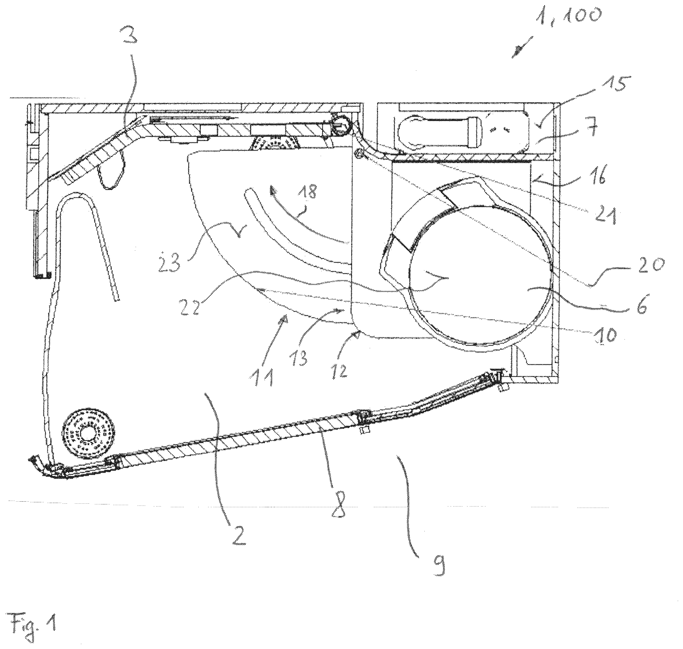

- Fig. 1: eine Sanitäreinrichtung eines Freizeitfahrzeugs in einer schematischen und abstrahierten Darstellung entsprechend einem Ausführungsbeispiel, wobei ein Auftritt zur Nutzung eines Toilettenbeckens ausgezogen ist und wobei eine Schwenkwand in ihrer Ausgangsposition ist.

Fig. 1 zeigt eine Sanitäreinrichtung 1 eines Freizeitfahrzeugs 100 in einer schematischen und abstrahierten Darstellung entsprechend einem Ausführungsbeispiel. Die Sanitäreinrichtung 1 kann als Sanitärzelle oder Nasszelle ausgebildet sein. Das Freizeitfahrzeug 100 kann insbesondere als Wohnmobil oder Wohnwagen ausgebildet sein. Die Sanitäreinrichtung 1 weist einen Boden 2 auf, der zumindest teilweise durch eine Bodenplatte gebildet sein kann. Eine Schwenkwand 3 der Sanitäreinrichtung 1 ist in einer Ausgangsstellung dargestellt.

Ferner kann die Sanitäreinrichtung 1 ein beispielsweise an der Schwenkwand 3 vorgesehenes Waschbecken aufweisen. Das Waschbecken ist zur Vereinfachung der Darstellung nicht gezeigt. Dann ermöglicht die Sanitäreinrichtung 1 in der Ausgangsposition eine Nutzung des Waschbeckens. Ferner ist zusätzlich ein Toilettenbecken 6 vorgesehen. Vorzugsweise ist dann das Waschbecken in der Duschposition der Schwenkwand über das Toilettenbecken 6 geschwenkt. Auf diese Weise kann eine optimierte Platzausnutzung zur Realisierung einer Sanitäreinrichtung 1 erfolgen. Außerdem kann die Sanitäreinrichtung 1 im Bereich eines Radkastens 7 des Freizeitfahrzeugs realisiert werden, so dass eine weitere Optimierung hinsichtlich des Grundrisses möglich ist. Die Sanitäreinrichtung 1 ist über eine in diesem Ausführungsbeispiel verstellbare Wand 8 mit Tür gegenüber dem übrigen Innenraum des Freizeitfahrzeugs 100 abgetrennt.

Ferner ist ein Laufboden 9 vorgesehen. Der Boden 2 kann zumindest näherungsweise auf der Höhe des Wohnmobilbodens 9 angeordnet sein. Der Boden 2 ist von zumindest einer Person betretbar. In der Sanitäreinrichtung 1 ist ein Auftritt 10 vorgesehen, der für eine Nutzung des Toilettenbeckens 6 in einem an das Toilettenbecken 6 angrenzenden Bereich 11 des betretbaren Bodens 2 über den betretbaren Boden 2 verstellbar ist.

Ferner ist das Toilettenbecken 6 auf ein Podest 12 gesetzt. das Podest 12 ist zumindest teilweise über einem Radkasten 7 des Freizeitfahrzeugs 100 angeordnet.

Das Podest 12 weist einen Zwischenraum 13 auf. Der Auftritt 10 ist in einer Ausgangsposition zumindest im Wesentlichen in dem Zwischenraum 13 angeordnet.

Das Podest 12 ist vorzugsweise auf eine Oberkante 15 des Radkastens 7 aufgesetzt. Außerdem ist das Toilettenbecken 6 mit seiner Unterkante 16 auf das Podest 12 gesetzt. Dadurch kann das Toilettenbecken 6 zumindest teilweise über dem Radkasten 7 des Freizeitfahrzeugs angeordnet werden.

Der Auftritt 10 ist aus dem Zwischenraum 13 durch eine Rotationsbewegung 18 über den betretbaren Boden 2 schwenkbar. Wenn die Schwenkwand 3 aus ihrer in Fig. 1 dargestellten Ausgangsposition in die Duschposition geschwenkt wird, dann wird der Auftritt 10 zumindest teilweise in seine Ausgangsposition zurückstellt. Ferner kann eine Rückstellung des Auftritts beispielsweise durch Muskelkraft auch erfolgen, ohne dass eine Verstellung der Schwenkwand erforderlich ist.

Eine Drehachse 20 des Auftritts 10 und eine Drehachse 21 der Schwenkwand 3 sind so nahe beieinander angeordnet, dass bei einem Verstellen der Schwenkwand 3 aus ihrer Ausgangsposition in ihre Duschposition die Schwenkwand 3 mit verstellt werden kann.

Die Höhe einer Sitzfläche 22 des Toilettenbeckens 6 ist relativ zu dem Auftritt 10 so vorgegeben, dass eine ergonomische Sitzposition einer Person auf der Sitzfläche 22 des Toilettenbeckens 6 besteht. In dieser Sitzposition kann sich die Person dann komfortabel mit ihren Füßen auf der Auftrittsfläche 23 abstützen. Speziell kann die Höhe der Sitzfläche 22 des Toilettenbeckens relativ 6 zu dem Auftritt 10 aus einem Bereich von etwa 42 cm bis etwa 48 cm vorgegeben sein.

## Patentansprüche

1. Sanitäreinrichtung (1) für ein Freizeitfahrzeug (100), insbesondere ein Wohnmobil oder einen Wohnwagen, wobei ein von zumindest einer Person betretbarer Boden (2) und ein Toilettenbecken (6) vorgesehen sind, wobei ein Auftritt (10) vorgesehen ist, der für eine Nutzung des Toilettenbeckens (6) zumindest in einem an das Toilettenbecken (6) angrenzenden Bereich (11) des betretbaren Bodens (2) über den betretbaren Boden (2) verstellbar ist,
**dadurch gekennzeichnet,**
**dass** das Toilettenbecken (6) auf ein Podest (12) gesetzt ist, dass das Podest (12) einen Zwischenraum (13) aufweist, dass der Auftritt (10) in einer Ausgangsposition zumindest im Wesentlichen in dem Zwischenraum (13) anordenbar ist und dass der Auftritt (10) aus dem Zwischenraum (13) durch eine Rotationsbewegung (18) über den betretbaren Boden (2) schwenkbar ist.

2. Sanitäreinrichtung nach Anspruch 1,
**dadurch gekennzeichnet,**
**dass** das Podest (12) im montierten Zustand zumindest teilweise über einem Radkasten (7) des Freizeitfahrzeugs (100) angeordnet ist.

3. Sanitäreinrichtung nach Anspruch 2,
**dadurch gekennzeichnet,**
**dass** das Podest (12) im montierten Zustand auf eine Oberkante (15) des Radkastens (7) aufgesetzt ist und/oder dass das Toilettenbecken (6) mit seiner Unterkante (16) auf das Podest (12) gesetzt ist.

4. Sanitäreinrichtung nach einem der Ansprüche 1 bis 3,
**dadurch gekennzeichnet,**
**dass** eine Schwenkwand (3) vorgesehen ist, die aus einer Ausgangsposition in eine Duschposition schwenkbar ist, und dass eine Drehachse (20) des Auftritts (10) und eine Drehachse (21) der Schwenkwand (3) so nahe beieinander angeordnet sind, dass bei einem Verstellen der Schwenkwand (3) aus ihrer Ausgangsposition in ihre Duschposition die Schwenkwand (3) den Auftritt (10) zumindest teilweise in seine Ausgangsposition zurückstellt.

5. Sanitäreinrichtung nach einem der Ansprüche 1 bis 4,
**dadurch gekennzeichnet,**
**dass** eine Höhe einer Sitzfläche (22) des Toilettenbeckens (6) relativ zu dem Auftritt (10) so vorgegeben ist, dass eine ergonomische Sitzposition einer Person auf der Sitzfläche (22) des Toilettenbeckens (6) ermöglicht ist, wenn die Füße der Person auf der Auftrittsfläche (23) abgestützt sind.

6. Sanitäreinrichtung nach einem der Ansprüche 1 bis 5,
**dadurch gekennzeichnet,**
**dass** eine Höhe einer Sitzfläche (22) des Toilettenbeckens relativ (6) zu dem Auftritt (10) aus einem Bereich von etwa 42 cm bis etwa 48 cm vorgegeben ist.

7. Freizeitfahrzeug (100), insbesondere Wohnmobil oder Wohnwagen, mit zumindest einer Sanitäreinrichtung (1) nach einem der Ansprüche 1 bis 6.

8. Freizeitfahrzeug nach Anspruch 7,
**dadurch gekennzeichnet,**
**dass** das Toilettenbecken (6) zumindest teilweise über einem Radkasten (7) des Freizeitfahrzeugs angeordnet ist.

## Claims

1. Sanitary facility (1) for a recreational vehicle (100), in particular a motorhome or a caravan, wherein a floor (2) which can be accessed by at least one person and a toilet bowl (6) are provided, wherein a step (10) is provided which is adjustable over the accessible floor (2) for use of the toilet bowl (6) at least in a region (11) of the accessible floor (2) adjacent to the toilet bowl (6),
**characterised in that**
the toilet bowl (6) is placed on a pedestal (12), that the pedestal (12) has a clearance (13), that the step (10) can be arranged at least essentially in the clearance (13) in an initial position and that the step (10) can be pivoted out of the clearance (13) by a rotational movement (18) over the accessible floor (2).

2. Sanitary facility according to claim 1,
**characterised in that**
in the assembled state, the pedestal (12) is arranged at least partially above a wheel case (7) of the recreational vehicle (100).

3. Sanitary facility according to claim 2,
**characterised in that**
in the assembled state, the pedestal (12) is placed on a top edge (15) of the wheel case (7) and/or that the toilet bowl (6) is placed with its lower edge (16) on the pedestal (12).

4. Sanitary facility according to any one of claims 1 to 3,
**characterised in that**
a pivot wall (3) is provided which can be pivoted from a starting position into a shower position, and that a rotational axis (20) of the step (10) and a rotational axis (21) of the pivot wall (3) are arranged so close to each other that when the pivot wall (3) is moved from its starting position to its shower position, the pivot wall (3) returns the step (10) at least partially to its starting position.

5. Sanitary facility according to any one of claims 1 to 4,
**characterised in that**
the height of a seat (22) of the toilet bowl (6) relative to the step (10) is predetermined in such a way that an ergonomic sitting position of a person on the seat (22) of the toilet bowl (6) is possible when the person's feet are supported on the step surface (23).

6. Sanitary facility according to any one of claims 1 to 5,
**characterised in that**
the height of a seat (22) of the toilet bowl relative (6) to the step (10) is predetermined in a range of approximately 42 cm to approximately 48 cm.

7. Recreational vehicle (100), in particular motorhome or caravan, with at least one Sanitary facility (1) according to one of claims 1 to 6.

8. The recreational vehicle of claim 7,
**characterised in that**
the toilet bowl (6) is arranged at least partially above a wheel case (7) of the recreational vehicle.

## Revendications

1. Équipement sanitaire (1) pour un véhicule de loisirs (100), en particulier un camping-car ou une caravane, dans lequel il est prévu un plancher (2) accessible par au moins une personne, et une cuvette de toilettes (6), dans lequel il est prévu une marche (10) qui est réglable au-dessus du plancher accessible (2), pour une utilisation de la cuvette de toilettes (6) au moins dans une zone voisine (11) de la cuvette de toilettes (6) du plancher accessible (2),
**caractérisé en ce que**
la cuvette de toilette (16) est placée sur une estrade (12), l'estrade (12) présente un espace intermédiaire (13), la marche (10), dans une position de départ, peut être agencée au moins sensiblement dans l'espace intermédiaire (13), et la marche (10) peut être pivotée hors de l'espace intermédiaire (13) via un mouvement en rotation (18) au-dessus du plancher accessible (2).

2. Équipement sanitaire selon la revendication 1,
**caractérisé en ce que**
l'estrade (12), dans l'état monté, est agencée au moins en partie au-dessus d'un passage de roue (7) du véhicule de loisirs (100).

3. Équipement sanitaire selon la revendication 2,
**caractérisé en ce que**
l'estrade (12), dans l'état monté, est placée sur un bord supérieur (15) du passage de roue (7) et/ou la cuvette de toilettes (6) est placée avec son bord inférieur (16) sur l'estrade (12).

4. Équipement sanitaire selon l'une quelconque des revendications 1 à 3,
**caractérisé en ce que**
il est prévu une paroi pivotante (3) qui peut être pivotée depuis une position de départ jusque dans une position de douche, et un axe de rotation (20) de la marche (10) et un axe de rotation (21) de la paroi pivotante (3) sont agencés proches l'un de l'autre de telle sorte que, lors d'un déplacement de la paroi pivotante (3) depuis sa position de départ jusque dans sa position de douche, la paroi pivotante (3) repositionne la marche (10) au moins en partie dans sa position de départ.

5. Équipement sanitaire selon l'une quelconque des revendications 1 à 4,
**caractérisé en ce que**
une hauteur de la surface d'assise (22) de la cuvette de toilettes (6) relativement à la marche (10) est définie de telle sorte qu'il est possible d'assurer une position d'assise ergonomique d'une personne sur la surface d'assise (22) de la cuvette de toilette (6) quand les pieds de la personne reposent sur la surface de la marche (23).

6. Équipement sanitaire selon l'une quelconque des revendications 1 à 5,
**caractérisé en ce que**
une hauteur de la surface d'assise (22) de la cuvette de toilettes (6) relativement à la marche (10) est définie dans une plage allant de 42 cm environ à 48 cm environ.

7. Véhicule de loisirs (100), en particulier camping-car ou caravane, comprenant au moins un équipement sanitaire (1) selon l'une quelconque des revendications 1 à 6.

8. Véhicule de loisirs selon la revendication 7,
**caractérisé en ce que**
la cuvette de toilettes (6) est agencée au moins en partie au-dessus d'un passage de roue (7) du véhicule de loisirs.
